# EUROPEAN PATENT SPECIFICATION

(11) **EP 4 258 849 B1**
(45) Date of publication and mention of the grant of the patent: **08.01.2025**
(21) Application number: 21834905.8
(22) Date of filing: 09.12.2021
(51) Int. Cl.: A01B 17/00, A01B 49/06, A01B 13/08, A01B 61/04, A01C 7/20, A01C 5/06

(54) **DEVICE FOR DISTRIBUTING AND BURYING GRANULAR SOLID PRODUCTS**
VORRICHTUNG ZUM VERTEILEN UND VERGRABEN VON KÖRNIGEN FESTEN PRODUKTEN
DISPOSITIF DE DISTRIBUTION ET D'ENFOUISSEMENT DE PRODUITS GRANULAIRES SOLIDES

(30) Priority: 11.12.2020 IT 202000030572
(43) Date of publication of application: 18.10.2023
(73) Proprietor: Startec S.r.l., 33079 Sesto al Reghena (PN) (IT)
(72) Inventor: SUT, Livio, 33078 San Vito al Tagliamento (PN) (IT)
(74) Representative: Piovesana, Paolo
(86) International application number: PCT/IB2021/061516
(87) International publication number: WO 2022/123485

(56) References cited:
- WO-A1-2015/009136
- GB-A- 2 336 089
- GB-A- 754 298
- IT-A1- TO 960 621
- US-A- 5 351 635
- US-A1- 2015 373 902

## Description

The present invention relates to a device for the distribution and burying solid granular products.

In agriculture, devices for distributing and burying solid granular products such as fertilizers, corrective agents, soil improvers, geodisinfestants, pesticides, etc. are known. They are generally applied to ploughing machines or the like, which can be self-propelled or towed by tractors and include a plurality of "anchors", arranged side by side to form one or more rows and configured to penetrate the ground so that with the advancement of the machine can perform a plurality of parallel grooves of the desired depth and of limited width.

The known devices for distributing and burying granular products, to be applied to subsoiler machines or the like, comprise a plurality of rigid tubular ducts which are applied behind each anchor and have the upper end connected through a flexible duct to an overlying tank containing the granular product to be distributed and buried, and the lower end which, during the work of the machine, opens to the desired depth in the ground, immediately behind the respective anchor, so that as the machine advances in the ground and the various anchors form the grooves in this, within each groove just formed the predetermined quantity of granular product is dispensed, which is then covered by the soil previously locally removed from the anchor.

The tank containing the granular product to be distributed can also be mounted in front of the tractor and in this case the product is transported by a pneumatic system to the flexible ducts that feed the rigid tubular ducts located behind the anchors.

A ploughing machine of this type is described in US 2015/0373902. It is equipped with a device for distributing and burying fertilizers, and includes a frame, to which a plurality of anchors spaced transversely and equipped with hydraulic jacks are articulated, which have the dual function of individually adjusting the inclination of the anchors with respect to the ground and to cushion any small oscillations that may arise during the work of the machine. Each anchor is associated with a fertilizer dispensing unit, with a duct placed behind the anchor itself and adjustable in height similarly to this one but independently of this to reach the correct working position, especially when ploughing the soil along longitudinal strips. In this case, in fact, it may happen that these longitudinal bands have different characteristics either due to the nature of the ground or because they are subjected to different stresses. It is not infrequent, in fact, the case of soils that in the previous year or also during the current tillage operations present certain longitudinal bands affected by the passage of the wheels of the operating machines which are more compact than the longitudinal bands not affected by this passage. For this reason it is suggested to adjust the depth of introduction of the fertilizer into the soil to overcome any compacted layer.

A problem that is often encountered in the use of known distribution and burying devices for solid granular products consists in the fact that the subsoiler machines, to which they are applied, very often have to operate with anchors at depths of even 30-60 cm and beyond, that is, at depths at which stones of considerable size, roots or other obstacles of difficult and sometimes practically impossible removal, can be found.

In order to avoid damage that can occur if an anchor of the ploughing machine encounters a large buried stone or in any case an obstacle of similar characteristics, it has already been proposed to mount each anchor on the frame of the machine by means of a pivot pin and preventing its rotation around said pin by means of controlled yielding.

These controlled yielding means can be constituted for example by a bolt which blocks the rotation of the anchor but which, upon exceeding a predetermined stress, yields to traction or shear, or they can be constituted by a spring or a fluid-dynamic cylinder, which in normal conditions counteracts the failure of a locking member of the anchor in the operative position but which yields when a predetermined amount of stress is exceeded and allows the total overturning backwards of the anchor to overcome the obstacle without causing any damage or breakage of the ploughing machine.

However, if a duct for dispensing the granular product to be buried is associated with an anchor, tilting the anchor backwards can irreparably damage the dispensing duct for the granular product, which is generally rigid; and while the controlled yielding means are designed to be quickly restored to their functionality, the delivery duct that has been damaged requires its disassembly from the machine, its replacement and the restoration of its connection with the supply duct coming from the tank of granular products.

The purpose of the invention is to eliminate this drawback and to propose a device for the distribution and burying of solid granular products, which is applicable to an anchor of a subsoiler and which does not suffer consequences in the event of its impact, during the distribution of the granular product, against an underground obstacle.

Another object of the invention is to propose a device which allows to simultaneously distribute and bury solid granular products even at different depths in the ground.

Another object of the invention is to propose a device which, when it has to distribute solid granular products at different depths, ensures a substantial uniformity of distribution at any depth.

Another object of the invention is to propose a device for distributing and burying solid granular products which can be easily restored in its functionality together with the respective anchor.

Another object of the invention is to propose a device for distributing and burying solid granular products which can be automatically restored in its functionality.

Another object of the invention is to propose a device for distributing and burying solid products which is simple and reliable in operation.

Another object of the invention is to propose a device for distributing and burying solid granular products which can be practically applied to any subsoiler equipped with anchors.

All these objects and others that will result from the following description are jointly or separately achieved according to the invention with a device for the distribution and burial of solid granular products as defined in claim 1.

The present invention is further clarified hereinafter in some of its preferred embodiments reported for purely illustrative and non-limiting purposes with reference to the attached drawing tables in which:
- Figure 1: shows a perspective view of a ploughing machine equipped with devices according to the invention,
- Figure 2: shows it in the same view of figure 1 with an overturned anchor following impact against an underground obstacle,
- Figure 3: shows a perspective view of an anchor of a ploughing machine equipped with a device according to the invention in a first embodiment and in operating condition,
- Figure 4: shows it in a perspective view in a first step of tilting of the anchor backwards following the impact against an underground obstacle.
- Figure 5: shows it in a perspective view in the final backward tilting phase,
- Figure 6: shows it in the same view of figure 3 in a different embodiment,
- Figure 7: shows in the same view of figure 3 an anchor of a ploughing machine equipped with a device according to the invention in a second embodiment,
- Figure 8: shows it in a perspective view in the same condition as Figure 4, and
- Figure 9: shows it in a perspective view in the same condition as Figure 5.

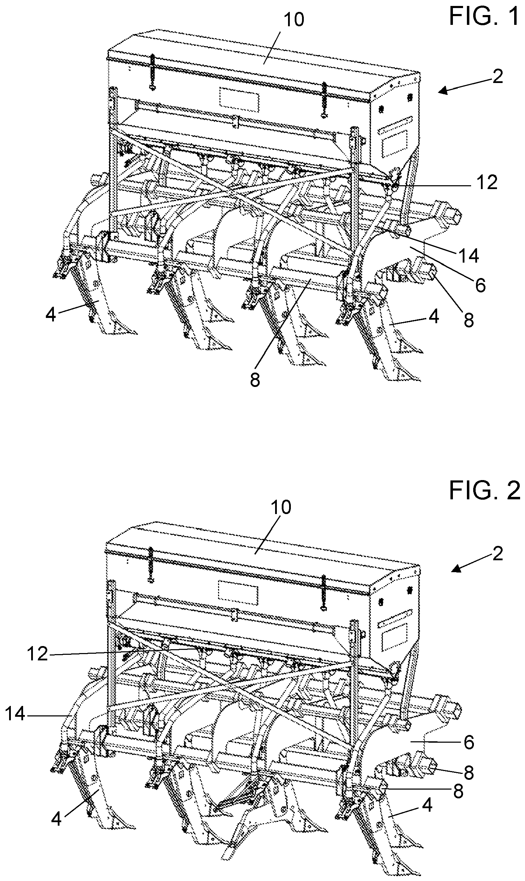

As can be seen from the figures, the device according to the invention for distributing and burying solid granular products finds application, for example, in soil ploughing machines or the like, and in particular in a ploughing machine 2, illustrated in figures 1 and 2, to be hooked to a tractor (not shown) for its movement in the soil to be treated.

The particular ploughing machine shown may for example present two transversal rows of anchors 4, a more advanced one formed by three anchors transversely placed side by side and spaced apart, and a more rearward formed by four staggered anchors with respect to those of the most advanced row, in so as to form seven parallel and equidistant depth grooves in the ground during the work phase, linked to the extent of the portion of anchor introduced into the ground. However, all this is well known to the skilled person and is described here essentially to contextualize the invention.

The frame 6 of the machine, which supports two transversal bars 8, to which the seven anchors 4 are constrained, also supports one or more tanks 10 for containing the solid granular products 11 to be distributed in the ground. In some cases a single tank is sufficient, but in other cases it is preferable to have several tanks containing the same product or different products, which are traditional in themselves and can consist of fertilizers, corrective agents, fertilizers, soil improvers, geodisinfestants, of pesticides, etc. or of mixtures of these.

The tank 10 is provided at the bottom with connections 12 for ducts 14 for feeding the granular products 11 to the individual distribution and burial units applied to each of the anchors 4.

The solid granular product to be distributed flows through the ducts 14 by gravity or pushed by a pneumatic system of the machine.

Preferably, each connection 12 is provided with a product 11 interception gate, which can be controlled manually or mechanically in a traditional manner.

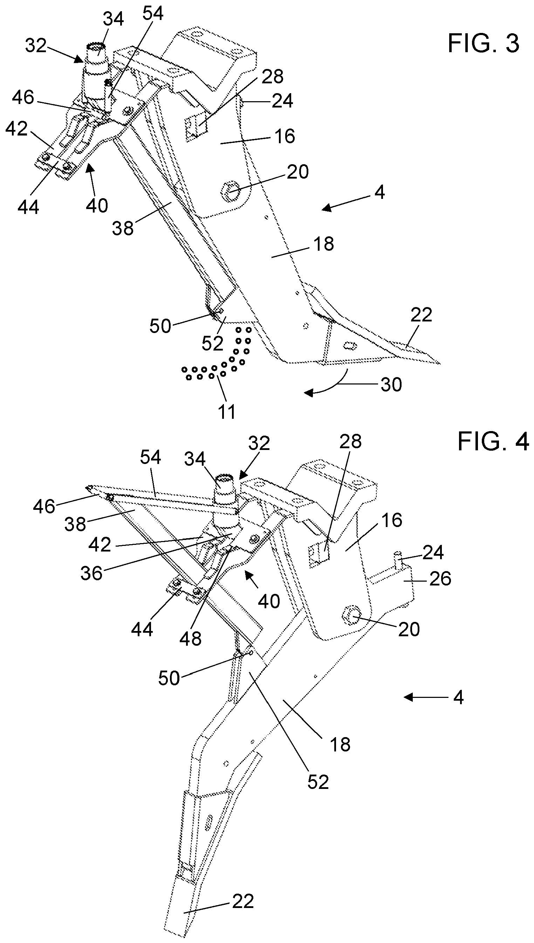

In the embodiment illustrated in Figures 3 - 6 each anchor 4 comprises an upper fork support 16, for attachment to a bar 8 of the frame 6 of the ploughing machine 2, and a leg 18, which is articulated to the support 16 at a transverse pin 20, has an elongated shape and is provided at the bottom with a shaped tip 22 so as to be able to easily penetrate the ground as the machine advances.

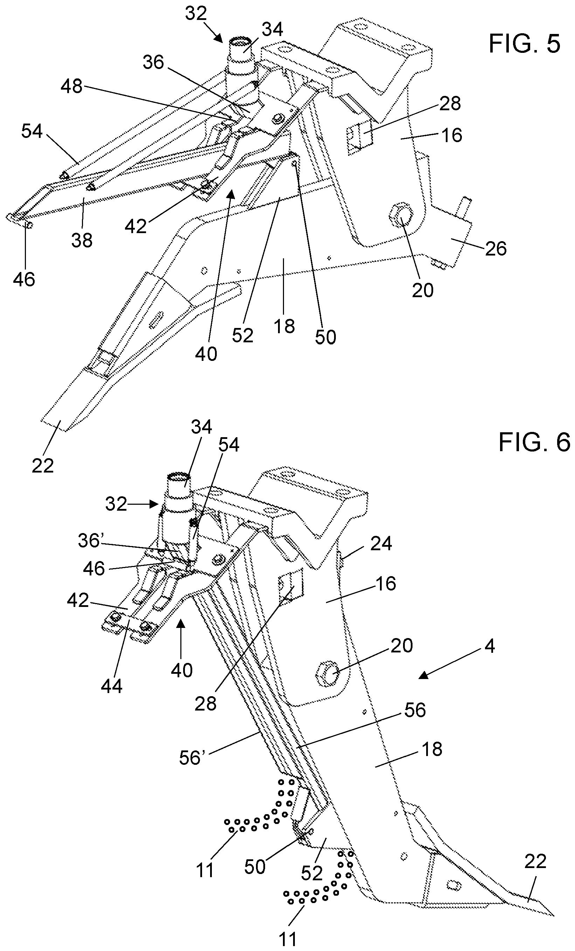

The leg 18 is kept with the tip 22 in the most advanced position, which is the working position, by a bolt 24, which adheres to an upper appendage 26, of which the leg 18 is provided (figures 4,5), to an abutment element 28, integral with the fork support 16.

The diameter of the bolt 24 is chosen so as to break when a predetermined amount of the tensile stress is exceeded, which arises when the leg 18 encounters an underground obstacle, which tends to overturn it backwards in the direction of the arrow 30 in figure 3.

Of course, this eventuality must be considered exceptional and involves stopping the machine and replacing the bolt 24, even if different ways of controlling the backward overturning of the leg 18 of the anchor 4 and these are not described here, as they are known by itself.

An attachment 32 is applied to the fork support 16 of each anchor 4 or, alternatively, to the frame 6 of the machine, for the lower end of the duct 14 for feeding the granular product 11 to that anchor, and generally this lower attachment comprises an upper cylindrical portion 34 for insertion of the lower end of the duct 14, which is preferably constituted by a substantially rigid or semi-rigid plastic tube, and also comprises a lower head 36, which in working condition extends upwards a duct 38, preferably with a rectangular section, intended to run behind the leg 18 of the anchor 4 when this is placed in working condition (Figure 3).

The rigid head 36 of the attachment 32 is preferably constrained to a guide element 40 of the duct 38, as will be better described hereinafter.

This guide element 40, if present, is fixed to the fork support 16 or to the frame 6 of the machine and can be, for example, made up of two parallel bars 42, which are spaced apart to an extent suitable to allow the free sliding of the duct 38 between these, they extend backwards and are connected at their rear end by a transverse bar 44.

A further transverse bar 46 is applied to the upper end of the duct 38 longer than the distance between the two bars 42 of the guide element 40, so as to prevent the complete disengagement of the duct 38 from the guide element 40 and to define the correct position of the upper end of the duct 38 in the working condition, that is, the position exactly facing the rigid head 36. For this purpose it is foreseen that in each of the two bars 42 a depression 48 can be obtained, which is engageable by the further transversal bar 46 to maintain the upper end of the duct 38 in contact with the rigid head 36 in order to create a continuity between the two for a correct passage of the granular product from one to the other.

The lower end of the duct 38 is articulated at a pin 50 to a pair of side-by-side plates 52, fixed to the leg 18.

The device according to the invention also provides that between the attachment 32 of the duct 14 for feeding the granular product and the upper end of the duct 38 can advantageously be interposed with one or more springs 54, which have the function of keeping the head 36 of the attachment 32 and the upper end of the duct 38 coupled together, but at the same time allowing both their spacing caused by external causes, and in particular the overturning backwards of the corresponding anchor 4, as will be seen better below, and their elastic re-coupling when they cease. For this purpose it is advantageous if the cooperating ends of the head 36 and of the duct 38 are cut according to an inclined plane or in any case according to the desired complementary pattern which ensures both their precise mating in coupled condition and their easy uncoupling.

The operation of the device according to the invention in this embodiment is as follows:
in normal working conditions, the ploughing machine 2 advances into the ground by itself or, in the case exemplified, pulled by a tractor, and has all the anchors 4 inserted with their tip 22 and with the lower part of their leg 18 in the ground at the depth determined by the characteristics of the machine and the required working depth.

As the machine advances, the anchors 4 create corresponding grooves, into which the solid granular product 11, which comes from the tank 10, through the feed ducts 14, the rigid head 36 can fall by gravity or pushed by the pneumatic system of the machine of the respective attachments 32 and the ducts 38. Immediately after the passage of the anchors 4, the respective grooves created by them close again.

If one of the anchors 4 accidentally encounters an obstacle that it cannot remove, for example a large buried stone, the stress it receives due to the contrast between the tip 22, which cannot advance due to the presence of the obstacle and the upper part of the leg 18, which is dragged forwards, causes a traction on the bolt 24 which keeps the anchor in operating condition, and if this stress exceeds a predefined value, it causes the bolt 24 to break and the consequent backwards turn of the tip 22 and of the lower part of the leg 18 around the pin 20 for articulation to the fork support 16.

Following this overturning, the duct 38 remains articulated with its lower end to the pin 50 and decouples with its upper end from the head 36, while remaining in the same vertical plane, thanks to the guide element 40 (figure 4), if provided, or thanks to the combined effect of the springs 54 and the pin 50.

Evidently and in this phase the springs 54 yield and allow the upper end of the duct 38 to begin to decouple from the rigid head 36 and this until the anchor has reached its most inclined position, linked to the shape and position of the obstacle (figure 5).

In this phase the granular product 11 falls to the ground, unless its delivery is interrupted by an interception gate valve possibly provided in the connection 12 of the supply duct 14 or by another interception element foreseen in the path of the granular product before this comes out of the lower attachment 32.

When the bolt 24 is then replaced or in any case when the correct working position of the leg 18 is restored after the obstacle has been overcome, the same forward rotation movement of the leg brings the duct 38 back into the correct working position, thanks also to the combined effect of the springs 54, if provided, and of the cooperation between the further transverse bar 46, fixed to the upper end of the duct itself, and the depression 48 obtained in the two bars 42 of the element guide 40.

It is easy to recognize that the device according to the invention just described is quite advantageous, since in the event of an obstacle, in which one of the anchors 4 should eventually run into, the backward yielding of the anchor itself would not cause any damage to the supply duct 14 and to the delivery duct 38 of the granular products and the functionality of the equipment would be restored without any repairs.

Furthermore, it can be applied to any ploughing machine in a very simple and rapid form and is able to operate in a safe and reliable manner.

The variant embodiment illustrated in Figure 6 differs from the embodiment described with reference to Figures 3-5 in that it is capable of distributing and burying the granular products 11 at two different depth levels.

To this end, the rigid head 36' of the attachment 32 is divided into two distinct ducts, one at the front and one at the rear, which extend into two similar ducts 56, 56', which correspond to the duct 38 of the previous embodiment.

The duct 56 continues between the two plates 52 to make the solid granular product 11 come out behind the anchor in a deeper position, while the duct 56' ends at a higher height.

In this case, without prejudice to the operating principle, which is analogous to the previous one, it is possible to have the granular products 11 come out at two different depths into the ground, or else one overflow to the surface and one overflow in depth.

In order to have substantially the same flow of granular product that comes out of the ducts 56, 56', it may be advantageous for the internal wall of the cylindrical portion 34 of the lower attachment 32 of each supply duct 14 to present a plurality of protuberances which can be constituted by small bosses or by circumferential or spiral-shaped ribs or by protrusions of other shapes, which have the purpose of distributing the granular product 11 in a substantially uniform manner over the entire passage section in the attachment 32 and from here into the two ducts 56, 56'.

This characteristic, however, can also be advantageously provided in the previous embodiment, for production uniformity.

The invention also provides that the internal part of the cylindrical portion 34 can also have different conformations to obtain a differentiated distribution of the granular product flow according to the particular needs, for example 1/3 of granular product on the surface or at a shorter depth and 2/3 to greater depth.

Furthermore, the invention also provides for the simultaneous distribution of different solid granular products 11 contained in two different tanks and made to flow, through distinct ducts 14, into the lower attachment 32 and from here into the rigid head 36 or 36' to realise the distribution of equal or different dosages of the different products at the same or at different depths.

Furthermore, what has been described for one or two tanks is also valid in the case of three or more tanks, with the possibility of increasing the number of different solid granular products to be distributed simultaneously and / or the number of different distribution depths.

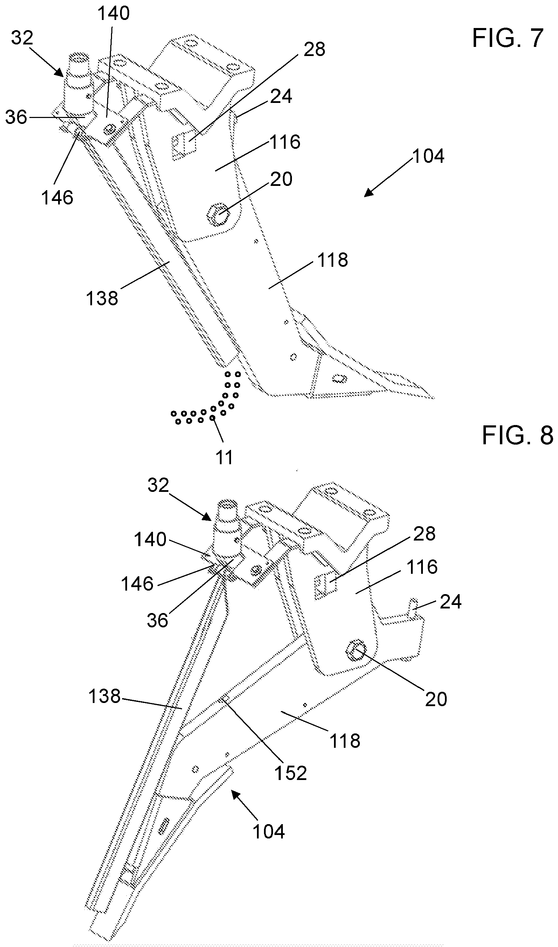

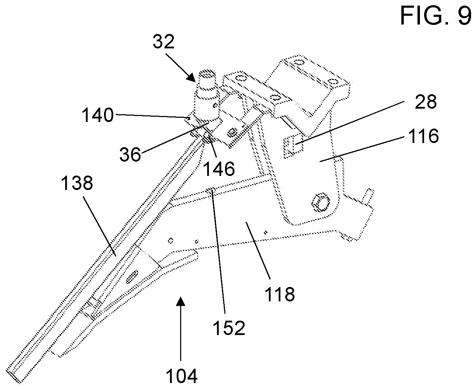

In a second embodiment, illustrated in Figures 7 - 9, while the fundamental principle underlying the present invention, its implementation methods, and in particular the methods of binding the duct for dispensing the granular products to the leg remain substantially similar of the anchor are slightly modified.

In particular, in this second embodiment, in which corresponding but modified elements are indicated with the same numerical references increased by 100, while corresponding unmodified elements retain the previous numbering, the duct 138 is no longer articulated below the leg 118 of the 104, and is no longer sliding with its upper part with respect to a guide integral with the frame of the subsoiler, but is articulated with its upper end to a support 140 integral with the frame of the machine and is sliding with its lower portion with respect to the leg 118 of the anchor 104.

More particularly, a support 140 can be preferably fixed to the fork support 116, to which the attachment 32 for the lower end of the feed duct of the granular product is constrained. Furthermore, the upper end of the duct 138 can be advantageously articulated to the same support 140 at a pin 146, which is cut, as in the previous embodiment, according to a complementary pattern to the head 36 of the attachment itself, in so that the duct 138 can be moved between a working position, in which it extends the head 36, and a position decoupled from this.

The lower part of the duct 138 is held in adherence to the rear edge of the leg 118 of the anchor 104, when this is in operating condition (fig. 7), and this can preferably be obtained thanks to the engagement of a hook 152, applied to the rear edge of the leg 118, in a corresponding slotted opening made in the front wall of the duct 138 and not visible in the drawings.

This constraint mode, which allows the disengagement of the duct 138 from the guide 118 as soon as this begins to rotate backwards around the pin 20 following the impact against an obstacle, could however be replaced by different modes, such as for example one or more tension springs (not shown), interposed between the duct 138 and the leg 118, or a torsion spring applied to the pin 146.

While the constraint in adherence of the duct 138 to the leg 118 in working condition by means of the hook 152 requires the intervention of the operator to engage the hook 152 in the corresponding opening of the duct 138, the constraint in adherence of the duct itself to the leg 118 can take place automatically, if one of the elastic return means described above is used.

In any case, apart from these different methods of construction and constraint in adherence of the duct 138 to the leg 118 of the respective anchor 104, for the rest the operation of the device according to the invention in this second embodiment is similar to the previous one, just as they are analogous also the additions described for the previous embodiment and in particular the plurality of ducts, into which the duct 138 can be divided, and the plurality of supply tanks with the same or with different granular products.

## Claims

1. Device for the distribution and burying of solid granular products, to be applied to a subsoiler (2) or similar, comprising:
- a frame (6),
- a plurality of anchors (4,104) individually mounted on said frame (6) and configured to create corresponding grooves in the ground intended to receive said solid granular products (11),
- a plurality of substantially rigid ducts (38,56,56', 138) placed behind the respective anchors (4,104),
- a plurality of supports (16), which are integral with said frame (6) and to which said anchors (4,104) are articulated in order to be moved between an active condition, with their lower end introduced into the ground, and an inactive condition overturned backwards, following impact against an obstacle in the ground,
- controlled yielding means, which keep each anchor (4,104) in an active condition in the absence of stresses exceeding a predetermined value, which should arise when said anchor (4,104) impacts against said obstacle,
- at least one tank (10) containing said granular product (11) to be distributed and buried,
- at least one supply duct (14) connecting said tank (10) with each of said substantially rigid ducts (38,56,56', 138) when the corresponding anchor (4,104) is in an active condition,
wherein each of said substantially rigid duct (38,56,56', 138) is articulated to said anchor (4, 104), **characterized in that**
each of said substantially rigid duct (38, 56, 56', 138) is associated with guide means, which following said controlled yielding make it pass from an active position, in which the upper end of said substantially rigid conduit (38,56,56', 138) communicates with said supply conduit (14), to an inactive position, in which the upper end of said substantially rigid duct (38,56,56', 138) is decoupled from said supply duct (14).

2. Device according to claim 1 **characterized in that** said substantially rigid duct (38, 56, 56') is articulated with its lower end to said anchor (4) and said guide means comprise a guide element (40), which is fixed to said frame (6), is affected by a slot arranged longitudinally, with reference to the direction of advancement of the tilling machine (2), and has a width such as to allow free sliding of the upper part of said substantially rigid duct (38, 56, 56') within said slot in its movement towards its inactive position.

3. Device according to claim 2 **characterized in that** the upper end of said substantially rigid duct (38, 56, 56') carries a contrasting element applied to it when it comes out of the slot made in said guide element (40).

4. Device according to claim 3 **characterized by** the fact that said contrast element is constituted by a transversal bar (46) applied at the upper end of said substantially rigid duct (38, 56, 56') and protruding laterally beyond the lateral dimension of the duct itself.

5. Device according to claim 4 **characterized in that** said guide element (40) presents a depression (48) cooperating with said transversal bar (46) to define the correct coupling position between said substantially rigid duct (38, 56, 56') and said attachment (32).

6. Device according to one or more of the preceding claims, **characterized in that** at said frame (6) is applied, at each anchor (4, 104), at least one attachment (32) for the lower end of said at least one supply duct (14), said attachment (32) being affected at the bottom by a head (36), configured to couple with the upper end of said substantially rigid duct (38, 56, 56', 138) when said anchor (4, 104) is in an active condition.

7. Device according to one or more of the preceding claims, **characterized in that** at least one elastic element (54) acting in the sense to keep said substantially rigid duct (38, 56, 56') and said attachment (32) elastically coupled together.

8. Device according to one or more of claims 6 and 7 **characterized in that** said supply duct (14) opens into an upper hollow portion (34) of said attachment (32), in which there are a plurality of protrusions aimed at distributing the granular product (11) uniformly inside the attachment itself.

9. Device according to one or more of the preceding claims, **characterized in that** the articulated connection between the lower end of said substantially rigid duct (38, 56, 56') and said anchor (4) is obtained with a pair of parallel side-by-side plates (52), integral with said anchor (4), and crossed by a transverse pin (50) for articulating the lower end of said substantially rigid duct (38, 56, 56').

10. Device according to one or more of the preceding claims **characterized in that** the upper end of said substantially rigid duct (38, 56, 56', 138) and a lower portion (36) of said attachment (32) are shaped so to favor their coupling and decoupling.

11. Device according to one or more of the preceding claims **characterized in that** said substantially rigid duct (38, 138) is divided longitudinally into at least two minor ducts (56, 56') having their lower ends placed at different heights.

12. Device according to claim 11, **characterized in that** said attachment (32) is associated with means for dividing said solid granular product (11) into the different minor ducts (56, 56') according to predetermined ratios.

13. Device according to claim 1 **characterized in that** said substantially rigid duct (138) is articulated with its upper end to said anchor (104) and said guide means are configured to maintain the stable positioning of said substantially rigid duct (138) behind said anchor (104), when this is in an active condition and to disengage it from it when it is overturned backwards.

14. Device according to claim 13 **characterized in that** a hook element (152) is applied to the rear edge of said anchor (104) configured to interact with an opening formed in the front wall of said substantially rigid duct (138) to retain it adhering to said anchor when it is in an active condition and to allow its disengagement when it begins to tip backwards.

15. Device according to one or more of the preceding claims **characterized in that** said tank (10) is mounted on the frame of said ploughing machine (2).

16. Device according to one or more of claims 1 to 14 **characterized in that** said tank is mounted on a tractor, which drives said ploughing machine (2).

## Patentansprüche

1. Vorrichtung zum Verteilen und Vergraben von körnigen festen Produkten, die an einem Tieflockerer (2) oder Ähnlichem anzubringen ist, umfassend:
- einen Rahmen (6),
- eine Vielzahl von Ankern (4, 104), die einzeln an dem Rahmen (6) eingebaut und so konfiguriert sind, dass sie entsprechende Rillen im Boden bilden, die zur Aufnahme der körnigen festen Produkte (11) bestimmt sind,
- eine Vielzahl von im Wesentlichen starren Leitungen (38, 56, 56', 138), die hinter den jeweiligen Ankern (4, 104) angeordnet sind,
- eine Vielzahl von Stützen (16), die mit dem Rahmen (6) fest verbunden sind und an denen die Anker (4, 104) angelenkt sind, um zwischen einem aktiven Zustand, bei dem ihr unteres Ende in den Boden eingeführt ist, und einem inaktiven Zustand, bei dem sie nach dem Aufprall auf ein Hindernis im Boden nach hinten gekippt sind, bewegt zu werden,
- kontrollierte Nachgiebigkeitsmittel, die jeden Anker (4, 104) in einem aktiven Zustand halten, wenn keine einen vorbestimmten Wert übersteigenden Spannungen auftreten, die entstehen sollten, wenn der Anker (4, 104) gegen das Hindernis stößt,
- mindestens einen Tank (10), der das zu verteilende und zu vergrabende körnige Produkt (11) enthält,
- mindestens eine Versorgungsleitung (14), die den Tank (10) mit jeder der im Wesentlichen starren Leitungen (38, 56, 56', 138) verbindet, wenn sich der entsprechende Anker (4, 104) in einem aktiven Zustand befindet,
wobei jede der im Wesentlichen starren Leitungen (38, 56, 56', 138) an dem Anker (4, 104) angelenkt ist, **dadurch gekennzeichnet, dass** jede der im Wesentlichen starren Leitungen (38, 56, 56', 138) mit Führungsmitteln verbunden ist, die sie nach dem kontrollierten Nachgeben von einer aktiven Position, in der das obere Ende der im Wesentlichen starren Leitung (38, 56, 56', 138) mit der Versorgungsleitung (14) in Verbindung steht, in eine inaktive Position übergeht, in der das obere Ende der im Wesentlichen starren Leitung (38, 56, 56', 138) von der Versorgungsleitung (14) entkoppelt ist.

2. Vorrichtung nach Anspruch 1, **dadurch gekennzeichnet, dass** die im Wesentlichen starre Leitung (38, 56, 56') mit ihrem unteren Ende an dem Anker (4) angelenkt ist und die Führungsmittel ein Führungselement (40) umfassen, das an dem Rahmen (6) befestigt ist, von einem Schlitz betroffen ist, der in Bezug auf die Vorschubrichtung der Bodenbearbeitungsmaschine (2) in Längsrichtung angeordnet ist, und eine solche Breite aufweist, dass ein freies Gleiten des oberen Teils der im Wesentlichen starren Leitung (38, 56, 56') innerhalb des Schlitzes bei ihrer Bewegung in ihre inaktive Position ermöglicht wird.

3. Vorrichtung nach Anspruch 2, **dadurch gekennzeichnet, dass** das obere Ende der im Wesentlichen starren Leitung (38, 56, 56') ein kontrastierendes Element trägt, das an ihm angebracht ist, wenn es aus dem in dem Führungselement (40) ausgebildeten Schlitz austritt.

4. Vorrichtung nach Anspruch 3, **dadurch gekennzeichnet, dass** das kontrastierende Element aus einem Querstab (46) besteht, der am oberen Ende der im Wesentlichen starren Leitung (38, 56, 56') angebracht ist und seitlich über die seitliche Abmessung der Leitung selbst vorsteht.

5. Vorrichtung nach Anspruch 4, **dadurch gekennzeichnet, dass** das Führungselement (40) eine Vertiefung (48) aufweist, die mit dem Querstab (46) zusammenwirkt, um die korrekte Kopplungsposition zwischen der im Wesentlichen starren Leitung (38, 56, 56') und der Befestigung (32) zu definieren.

6. Vorrichtung nach einem oder mehreren der vorstehenden Ansprüche, **dadurch gekennzeichnet, dass** an dem Rahmen (6) an jedem Anker (4, 104) mindestens eine Befestigung (32) für das untere Ende der mindestens einen Versorgungsleitung (14) angebracht ist, wobei die Befestigung (32) an der Unterseite von einem Kopf (36) betroffen ist, der so konfiguriert ist, dass er mit dem oberen Ende der im Wesentlichen starren Leitung (38, 56, 56', 138) gekoppelt ist, wenn sich der Anker (4, 104) in einem aktiven Zustand befindet.

7. Vorrichtung nach einem oder mehreren der vorstehenden Ansprüche, **dadurch gekennzeichnet, dass** mindestens ein elastisches Element (54) in dem Sinne wirkt, dass es die im Wesentlichen starre Leitung (38, 56, 56') und die Befestigung (32) elastisch miteinander verbindet.

8. Vorrichtung nach einem oder mehreren der Ansprüche 6 und 7, **dadurch gekennzeichnet, dass** die Versorgungsleitung (14) in einen oberen hohlen Abschnitt (34) der Befestigung (32) mündet, in dem sich mehrere Vorsprünge befinden, die dazu dienen, das körnige Produkt (11) gleichmäßig innerhalb der Befestigung selbst zu verteilen.

9. Vorrichtung nach einem oder mehreren der vorstehenden Ansprüche, **dadurch gekennzeichnet, dass** die gelenkige Verbindung zwischen dem unteren Ende der im Wesentlichen starren Leitung (38, 56, 56') und dem Anker (4) mit einem Paar paralleler, nebeneinander liegender Platten (52) erhalten wird, die mit dem Anker (4) einstückig sind und von einem Querstift (50) gekreuzt werden, um das untere Ende der im Wesentlichen starren Leitung (38, 56, 56') gelenkig zu machen.

10. Vorrichtung nach einem oder mehreren der vorstehenden Ansprüche, **dadurch gekennzeichnet, dass** das obere Ende der im Wesentlichen starren Leitung (38, 56, 56', 138) und ein unterer Abschnitt (36) der Befestigung (32) so geformt sind, dass sie ihre Kopplung und Entkopplung erleichtern.

11. Vorrichtung nach einem oder mehreren der vorstehenden Ansprüche, **dadurch gekennzeichnet, dass** die im Wesentlichen starre Leitung (38, 138) in Längsrichtung in mindestens zwei kleinere Leitungen (56, 56') unterteilt ist, deren untere Enden auf unterschiedlichen Höhen liegen.

12. Vorrichtung nach Anspruch 11, **dadurch gekennzeichnet, dass** die Befestigung (32) mit Mitteln zum Aufteilen des körnigen festen Produkts (11) auf die verschiedenen kleineren Leitungen (56, 56') gemäß vorbestimmten Verhältnissen verbunden ist.

13. Vorrichtung nach Anspruch 1, **dadurch gekennzeichnet, dass** die im Wesentlichen starre Leitung (138) mit ihrem oberen Ende an dem Anker (104) angelenkt ist und die Führungsmittel so konfiguriert sind, dass sie die stabile Positionierung der im Wesentlichen starren Leitung (138) hinter dem Anker (104) aufrechterhalten, wenn sich dieser in einem aktiven Zustand befindet, und sie von ihm lösen, wenn er nach hinten gekippt wird.

14. Vorrichtung nach Anspruch 13, **dadurch gekennzeichnet, dass** ein Hakenelement (152) an der hinteren Kante des Ankers (104) angebracht ist, das so gestaltet ist, dass es mit einer in der vorderen Wand der im Wesentlichen starren Leitung (138) ausgebildeten Öffnung zusammenwirkt, um diese an dem Anker festzuhalten, wenn sie sich in einem aktiven Zustand befindet, und um ihr Lösen zu ermöglichen, wenn sie beginnt, nach hinten zu kippen.

15. Vorrichtung nach einem oder mehreren der vorstehenden Ansprüche, **dadurch gekennzeichnet, dass** der Tank (10) am Rahmen der Pflugmaschine (2) angebracht ist.

16. Vorrichtung nach einem oder mehreren der Ansprüche 1 bis 14, **dadurch gekennzeichnet, dass** der Tank an einem Traktor montiert ist, der die Pflugmaschine (2) antreibt.

## Revendications

1. Dispositif de distribution et d'enfouissement de produits granulaires solides, à appliquer à une sous-soleuse (2) ou similaire, comprenant :
- un cadre (6),
- une pluralité d'ancrages (4, 104) montés individuellement sur ledit cadre (6) et configurés pour créer des sillons correspondants dans le sol destinés à recevoir lesdits produits granulaires solides (11),
- une pluralité de conduits (38, 56, 56', 138) sensiblement rigides placés derrière les ancrages respectifs (4, 104),
- une pluralité de supports (16), qui sont solidaires dudit cadre (6) et auxquels lesdits ancrages (4, 104) sont articulées pour être déplacés entre un état actif, leur extrémité inférieure étant introduite dans le sol, et un état inactif retourné vers l'arrière, suite à un impact contre un obstacle dans le sol,
- des moyens d'élasticité commandés, qui maintiennent chaque ancrage (4, 104) dans un état actif en l'absence de contraintes dépassant une valeur prédéterminée, qui devraient se produire lorsque ledit ancrage (4, 104) heurte ledit obstacle,
- au moins un réservoir (10) contenant ledit produit granulaire (11) à distribuer et à enfouir,
- au moins un conduit d'alimentation (14) raccordant ledit réservoir (10) à chacun desdits conduits (38, 56, 56', 138) sensiblement rigides lorsque l'ancrage correspondant (4, 104) se trouve dans un état actif,
chacun desdits conduits (38, 56, 56', 138) sensiblement rigides étant articulé audit ancrage (4, 104), **caractérisé en ce que** chacun desdits conduits (38, 56, 56', 138) sensiblement rigides est associé à des moyens de guidage qui, en suivant ladite élasticité commandée, le font passer d'une position active, dans laquelle l'extrémité supérieure dudit conduit (38, 56, 56', 138) sensiblement rigide communique avec ledit conduit d'alimentation (14), à une position inactive, dans laquelle l'extrémité supérieure dudit conduit (38, 56, 56', 138) sensiblement rigide est découplée dudit conduit d'alimentation (14).

2. Dispositif selon la revendication 1, **caractérisé en ce que** ledit conduit (38, 56, 56') sensiblement rigide est articulé par son extrémité inférieure audit ancrage (4) et lesdits moyens de guidage comprennent un élément de guidage (40), qui est fixé audit cadre (6), affecté d'une fente disposée longitudinalement, en référence à la direction d'avancement de la défonceuse (2), et présente une largeur telle qu'elle permet le coulissement libre de la partie supérieure dudit conduit (38, 56, 56') sensiblement rigide à l'intérieur de ladite fente dans son mouvement vers sa position inactive.

3. Dispositif selon la revendication 2, **caractérisé en ce que** l'extrémité supérieure dudit conduit (38, 56, 56') sensiblement rigide transporte un élément de contraste appliqué sur elle lorsqu'elle sort de la fente réalisée dans ledit élément de guidage (40).

4. Dispositif selon la revendication 3, **caractérisé par le fait que** ledit élément d'opposition est constitué par une barre transversale (46) appliquée à l'extrémité supérieure dudit conduit (38, 56, 56') sensiblement rigide et dépassant latéralement au-delà de la dimension latérale du conduit lui-même.

5. Dispositif selon la revendication 4, **caractérisé en ce que** ledit élément de guidage (40) présente une dépression (48) coopérant avec ladite barre transversale (46) pour définir la position d'accouplement correcte entre ledit conduit (38, 56, 56') sensiblement rigide et ladite fixation (32).

6. Dispositif selon l'une ou plusieurs des revendications précédentes, **caractérisé en ce que** sur ledit cadre (6) est appliquée, à chaque ancrage (4, 104), au moins une fixation (32) pour l'extrémité inférieure dudit au moins un conduit d'alimentation (14), ladite fixation (32) étant affectée au fond par une tête (36), configurée pour s'accoupler à l'extrémité supérieure dudit conduit (38, 56, 56', 138) sensiblement rigide lorsque ledit ancrage (4, 104) se trouve dans un état actif.

7. Dispositif selon l'une ou plusieurs des revendications précédentes, **caractérisé en ce qu'**au moins un élément élastique (54) agissant dans le sens de maintenir ledit conduit (38, 56, 56') sensiblement rigide et ladite fixation (32) accouplés élastiquement.

8. Dispositif selon l'une ou plusieurs des revendications 6 et 7, **caractérisé en ce que** ledit conduit d'alimentation (14) débouche dans une partie creuse supérieure (34) de ladite fixation (32), dans laquelle se trouve une pluralité de protubérances destinées à distribuer uniformément le produit granulaire (11) à l'intérieur de la fixation elle-même.

9. Dispositif selon l'une ou plusieurs des revendications précédentes, **caractérisé en ce que** le raccordement articulé, entre l'extrémité inférieure dudit conduit (38, 56, 56') sensiblement rigide et ledit ancrage (4), est obtenu grâce à une paire de plaques parallèles juxtaposées (52), solidaires dudit ancrage (4), et traversées par un axe transversal (50) d'articulation de l'extrémité inférieure dudit conduit (38, 56, 56') sensiblement rigide.

10. Dispositif selon l'une ou plusieurs des revendications précédentes, **caractérisé en ce que** l'extrémité supérieure dudit conduit (38, 56, 56', 138) sensiblement rigide et une partie inférieure (36) de ladite fixation (32) sont façonnées de manière à favoriser leur accouplement et leur désaccouplement.

11. Dispositif selon l'une ou plusieurs des revendications précédentes, **caractérisé en ce que** ledit conduit (38, 138) sensiblement rigide est divisé longitudinalement en au moins deux conduits mineurs (56, 56') dont les extrémités inférieures sont placées à des hauteurs différentes.

12. Dispositif selon la revendication 11, **caractérisé en ce que** ladite fixation (32) est associée à des moyens de répartition dudit produit granulaire solide (11) dans les différents conduits mineurs (56, 56') selon des rapports prédéterminés.

13. Dispositif selon la revendication 1, **caractérisé en ce que** ledit conduit (138) sensiblement rigide est articulé avec son extrémité supérieure audit ancrage (104) et lesdits moyens de guidage sont configurés pour maintenir le positionnement stable dudit conduit (138) sensiblement rigide derrière ledit ancrage (104), lorsque celui-ci se trouve dans un état actif et pour l'en désengager lorsqu'il est retourné vers l'arrière.

14. Dispositif selon la revendication 13, **caractérisé en ce qu'**un élément de crochet (152) est appliqué au bord arrière dudit ancrage (104) configuré pour interagir avec une ouverture formée dans la paroi avant dudit conduit (138) sensiblement rigide afin de le maintenir adhérent audit ancrage lorsqu'il se trouve dans un état actif et de permettre son désengagement lorsqu'il commence à s'incliner vers l'arrière.

15. Dispositif selon l'une ou plusieurs des revendications précédentes, **caractérisé en ce que** ledit réservoir (10) est monté sur le cadre de ladite machine de labour (2).

16. Dispositif selon l'une ou plusieurs des revendications 1 à 14, **caractérisé en ce que** ledit réservoir est monté sur un tracteur qui entraîne ladite machine de labour (2).
